# EUROPÄISCHE PATENTANMELDUNG

(11) **EP 3 473 938 A1**
(43) Veröffentlichungstag der Anmeldung: **24.04.2019**
(21) Anmeldenummer: 18201044.7
(22) Anmeldetag: 17.10.2018
(51) Int. Cl.: F24D 3/14

(54) **DÄMMSCHICHT FÜR EINE FLÄCHENTEMPERIERVORRICHTUNG UND THERMISCH LEITENDE LAGE FÜR EINE DÄMMSCHICHT**

(30) Priorität: 19.10.2017 DE 202017106337 U; 24.04.2018 DE 102018109799
(71) Anmelder: herotec GmbH Flächenheizung, 59227 Ahlen (DE)
(72) Erfinder: Heuser, Thomas, 59227 Ahlen-Vorhelm (DE)
(74) Vertreter: dompatent von Kreisler Selting Werner - Partnerschaft von Patent- und Rechtsanwälten mbB

(57) **Zusammenfassung**

Die Erfindung betrifft eine thermisch leitende Lage für eine Dämmschicht für eine Flächentemperiervorrichtung, insbesondere Flächenheizung und vorzugsweise Fußbodenheizung, wobei die Dämmschicht mindestens ein Dämmelement (12) aus wärme- und/oder trittschalldämmendem Material, das eine Unterseite (16) zur Auflage auf einem Untergrund und eine der Unterseite (16) abgewandte Oberseite (18) aufweist, wobei die Oberseite (18) des Dämmelements (12) mindestens eine Nut (20) aufweist. Die thermisch leitende Lage ist versehen mit mindestens einer Thermoplatte (24), die mindestens eine Sicke (22) zur Aufnahme einer temperierbaren Leitung für den Transport eines Temperierfluids aufweist. Die Thermoplatte (24) ist zur Anordnung auf der Oberseite (18) des Dämmelements (12) und die mindestens eine Sicke (22) der Thermoplatte (24) zur Aufnahme durch der mindestens eine Nut (20) der Oberseite (18) des Dämmelements (12) vorgesehen. Die Thermoplatte (24) ist mittels Verankerungselementen (30, 50) mechanisch an dem Dämmelement (12) fixierbar, wobei die Verankerungselemente (30, 50) einteilig mit der Thermoplatte (24) ausgebildet und aus dieser herausgedrückt oder herausgeschnitten sind und in das wärme- und/oder trittschalldämmende Material des Dämmelements (12) einsteckbar oder eingesteckt sind.

## Beschreibung

Die Erfindung betrifft eine Dämmschicht für eine Flächentemperiervorrichtung, bei der es sich insbesondere um eine Flächenheizung (zum Einsatz in bzw. an Wänden, Böden und/oder Decken) und vorzugsweise um eine Fußbodenheizung handelt. Ferner betrifft die Erfindung eine thermisch leitende Lage für eine Dämmschicht.

Dämmschichten für Flächenheizungen oder Flächenkühlungen (nachfolgend Flächentemperiervorrichtungen genannt) sind grundsätzlich bekannt. Eine derartige Dämmschicht umfasst im Regelfall mehrere typischerweise rechteckige plattenartige Dämmelemente aus wärmedämmendem und/oder trittschalldämmendem Material auf. Auf einer derartigen Dämmschicht werden dann Rohre für den Transport eines Temperiermediums verlegt. Hierbei ist es bekannt, diese Rohre zur Reduktion der Aufbauhöhe in Nuten zu verlegen, die in die Oberseiten der Dämmelemente eingebracht sind. Um bei einer derartigen Anordnung der Rohre in der Oberseite eines Dämmelements die thermische Kopplung der Rohre zur Oberseite zu ermöglichen, ist es bekannt, die Oberseite der Dämmelemente mit Folien- bzw. Platten-Wärmeleitlamellen (nachfolgend Thermoplatten genannt) aus thermisch leitendem Material zu versehen, das sich auch bis in die Nuten erstreckt und diese "auskleidet".

In DE-U-296 08 258 ist ein derartiges Dämmelement beschrieben.

Die mechanische Fixierung der Thermoplatten an den Oberseiten von Dämmelementen hängt unter anderem von dem Material ab, aus dem die Dämmelemente bestehen. Während bei wärmedämmenden Kunststoffmaterialien und - Schäumen im Regelfall für die Fixierung einer Verklebung der Thermoplatte mit der Oberseite der Dämmelemente in Frage kommt, bereitet diese Art der Verbindung dann Schwierigkeiten, wenn das Dämmelement Fasermaterial aufweist. Bei einer Verklebung der Thermoplatten mit den Oberseiten von Dämmelementen aus Fasermaterial besteht die Gefahr, dass das Dämmelement an seiner Oberseite delaminiert und sich damit die Thermoplatte lösen kann.

Aus DE-A-30 35 049 ist ein plattenförmiges Raumheizelement bekannt, bei dem ein Wärmeleitblech mit der Dämmschicht eines Dämmelements vernietet ist.

Aus CH-A-299 300 ist eine Putzscheibe bekannt, die eine Metallplatte aufweist, von dem C-förmig gebogene Haken abstehen, die spanartig aus der Oberfläche der einen Seite der Metallplatte herausgeschnitten sind. Auf diese Seite der Metallplatte wird eine ein- und vorzugsweise zweilagige Putzschicht aufgetragen. Diese Putzschicht bildet diejenige Seite der Putzscheibe, die einem Gebäuderaum zugewandt ist.

Aufgabe der Erfindung ist es, eine Dämmschicht für eine Flächentemperiervorrichtung anzugeben, bei der Dämmelemente aus faserigem Dämmmaterial eingesetzt werden, an deren Oberseiten thermisch leitende Schichten bzw. Platten angeordnet sind, die über eine verbesserte Fixierung zum Schutz vor einer beispielsweise Delaminierung o.dgl. Beschädigung der Dämmelemente verfügen. Ferner ist Aufgabe der Erfindung, eine Konstruktion für die Anordnung einer thermisch leitenden Schicht an der Oberseite einer Dämmschicht anzubringen.

Zur Lösung dieser Aufgabe wird mit der Erfindung eine Dämmschicht für eine Flächentemperiervorrichtung, insbesondere Flächenheizung und vorzugsweise Fußbodenheizung vorgeschlagen, wobei die Dämmschicht versehen mit
- mindestens einem plattenartigen Dämmelement aus wärme- und/oder trittschalldämmendem Material, das eine Unterseite zur Auflage auf einem Untergrund und eine der Unterseite abgewandte Oberseite aufweist,
- wobei die Oberseite des Dämmelements mindestens eine Nut aufweist, und
- mindestens einer thermisch leitenden Thermoplatte, die mindestens eine Sicke zur Aufnahme einer temperierbaren Leitung wie z.B. eines Rohres für den Transport eines Temperierfluids (Heiz- oder Kühlmediums) und mindestens einen neben der Sicke angeordneten Plattenbereich aufweist,
- wobei die Thermoplatte zur Anordnung auf der Oberseite des Dämmelements und ihre mindestens eine Sicke zur Aufnahme durch der mindestens eine Nut der Oberseite des Dämmelements vorgesehen ist,
- wobei die Thermoplatte mittels mindestens eines einteilig mit der Thermoplatte ausgebildeten Verankerungselements mechanisch an dem Dämmelement fixierbar ist und
- wobei das mindestens eine Verankerungselement von dem oder einem Plattenbereich der Thermoplatte zum Dämmelement hin oder von der oder einer Sicke nach unten oder seitlich zum Dämmelement hin gerichtet ist und in dessen wärme- und/oder trittschalldämmende Material hineinragt.

Zur Lösung der Aufgabe dient ferner eine thermisch leitende Lage für eine Dämmschicht für eine Flächentemperiervorrichtung, insbesondere Flächenheizung und vorzugsweise Fußbodenheizung, wobei die Dämmschicht mindestens ein Dämmelement aus wärme- und/oder trittschalldämmendem Material, das eine Unterseite zur Auflage auf einem Untergrund und eine der Unterseite abgewandte Oberseite aufweist, wobei die Oberseite des Dämmelements mindestens eine Nut aufweist, mit
- mindestens einer thermisch leitenden Thermoplatte, die mindestens eine Sicke zur Aufnahme einer temperierbaren Leitung wie z.B. eines Rohres für den Transport eines Temperierfluids und mindestens einen neben der Sicke angeordneten Plattenbereich aufweist,
- wobei die Thermoplatte zur Anordnung auf der Oberseite des Dämmelements und die mindestens eine Sicke der Thermoplatte zur Aufnahme durch der mindestens eine Nut der Oberseite des Dämmelements vorgesehen ist,
- wobei die Thermoplatte mittels mindestens eines einteilig mit der Thermoplatte ausgebildeten Verankerungselements mechanisch an dem Dämmelement fixierbar ist und
- wobei das mindestens eine Verankerungselement von dem oder einen Plattenbereich der Thermoplatte zum Dämmelement hin oder von der oder einer Sicke nach unten oder seitlich zum Dämmelement hin gerichtet ist und in dessen wärme- und/oder trittschalldämmende Material des Dämmelements hineinragt.

Bei der erfindungsgemäßen Dämmschicht werden ein oder mehrere im Regelfall viereckige plattenartige Dämmelemente aus wärme- und/oder trittschalldämmendem Material, vorzugsweise Faserdämmmaterial, unterschiedlicher Güte eingesetzt, wobei die geometrische Form der Dämmelemente für die Erfindung von untergeordneter Bedeutung ist. Man verwendet im Regelfall rechteckige Dämmelemente, um mit Flächentemperiervorrichtungen (Flächenheizung und/oder Kühlung) zu versehene Flächen bequem und "dicht an dicht", d. h. lückenlos, mit Dämmelementen belegen zu können. Jedes Dämmelement weist eine Unterseite zur Auflage auf einem Untergrund sowie eine Oberseite auf, die der Unterseite abgewandt ist. In der Oberseite ist mindestens eine Nut ausgebildet. Die Oberseite eines Dämmelementes weist eine Schicht aus thermisch leitendem Material wie z. B. Blech oder Folie aus oder mit unterschiedlichen Materialien z. B. Aluminium (nachfolgend Thermoplatte genannt), auf, die eine gewisse Eigenformstabilität aufweist und mit mindestens einer Sicke versehen ist, die der Aufnahme einer temperierbaren Leitung dient. Bei dieser temperierbaren Leitung kann es sich beispielsweise um eine elektrisch beheizbare Leitung (elektrischer Heizwiderstand) oder, was typischerweise der Fall sein wird, um ein Rohr für den Transport eines Temperierfluids (z.B. Warm- oder Kaltwasser) handeln. Bei der mindestens einen Sicke handelt es sich um eine durch Verformung der Thermoplatte gebildete Nut, die auch als Omega-Nut bezeichnet wird, da sie einen um 180° gebogenen Grund aufweist und sich zu ihrem offenen oberen Ende hin geringfügig verjüngt bzw. am offenen Ende Verengungen aufweist, um ein von der Sicke aufgenommenes Rohr unter möglichst großflächigem mechanischen Kontakt zu umschließen, was für die thermische Kopplung des Rohres mit der Sicke und damit mit der Thermoplatte förderlich ist. Vorzugsweise beidseitig einer Sicke weist die Thermoplatte im Wesentlichen ebene Plattenbereiche auf. Eine derartige Thermoplatte wird auch als Wärmeleitlamelle bezeichnet.

Erfindungsgemäß ist nun die Thermoplatte mittels Verankerungselementen mechanisch an dem Dämmelement fixierbar bzw. fixiert. Die Verankerungselemente sind dabei von der Oberseite des Dämmelements aus in dessen wärme- und/oder trittschalldämmendes Material eingesteckt, eingetrieben oder einsteckbar bzw. eintreibbar. Die Verankerungselemente sind einteilig mit der Thermoplatte ausgebildet. Zusätzlich können Verankerungselemente verwendet werden, die als von der Thermoplatte separate Bauteile ausgebildet sowie mit der Thermoplatte durch beispielsweise Klebung, Schweißung, Vernietung, Verschraubung o.dgl. Fixierung verbunden sind.

Jedes einteilig mit der Thermoplatte verbundene Verankerungselement ist aus dem Material der Thermoplatte herausgebrochen bzw. herausgeschnitten. Ein derartiges Verankerungselement, das von einem Plattenbereich der Thermoplatte absteht, erstreckt sich vorzugsweise in einem spitzen Winkel zum Plattenbereich der Thermoplatte. Wenn das mindestens eine Verankerungselement von der Sicke absteht, erstreckt es sich von einer der beiden Seitenflanken der Sicke oder dem Grund der Sicke in einem insbesondere rechten Winkel und befindet sich somit unterhalb des sich an den die betreffende Seitenflanke der Sicke anschließenden Plattenbereich. Die Ausbildung bzw. das Herausschneiden oder das Herausbrechen der Verankerungselemente aus der Thermoplatte erfolgt mittels entsprechender Schneid- oder Ausbrechwerkzeuge. Ein derartiges Werkzeug weist entweder eine Schneidkante und/oder einen hakenförmigen Vorsprung auf. In beiden Fällen arbeitet sich das Werkzeug schneidend oder durchstoßend in die Thermoplatte ein, wobei Material der Thermoplatte aus dieser herausgeschnitten bzw. herausgebrochen wird und anschließend von der Thermoplatte absteht und ein insbesondere zungenförmiges Verankerungselement bildet. Das Material der Thermoplatte ist vorzugsweise Blech bzw. eine Aluminiumlegierung, ist also vergleichsweise "weich", so dass sich die Verankerungselemente mit einfachen Werkzeugen und geringem Kraftaufwand aus der Thermoplatte herausbrechen bzw. herausschneiden lassen.

Nach der Erfindung erfolgt also die Verbindung der Thermoplatte mit dem Material eines Dämmelementes mittels mechanischer Verankerungselemente (in Ausgestaltung und Anzahl frei wählbar), also zunächst einmal ohne eine Verklebung. Die mechanischen Verankerungselemente verankern sich in dem Material des Dämmelementes und halten somit die Thermoplatte. Da sich die Verankerungselemente anders als ein Kleber nicht lediglich an der Oberseite des Dämmelementes befinden, sondern tiefer in das Dämmelement eindringen, ist die Sicherung der Thermoplatte am Dämmelement verbessert und die Gefahr einer Beschädigung (Delaminierung) des Dämmelementes dann, wenn dieses aus Fasermaterial besteht, reduziert.

In vorteilhafter Weiterbildung der Erfindung kann vorgesehen sein, dass die Verankerungselemente einteilig mit der Thermoplatte ausgebildet sind und unter einem insbesondere spitzen Winkel von der Thermoplatte abstehen, wobei zusätzlich mindestens ein weiteres Verankerungselement als gegenüber der Thermoplatte separates Element zum Einführen in ein in der Thermoplatte ausgebildetes Loch ausgeführt sein kann.

Hierbei kann mit Vorteil vorgesehen sein, dass ein einteilig mit der Thermoplatte ausgebildetes Verankerungselement als aus dem Material der Thermoplatte freigeschnittene Zunge, insbesondere als sich zu ihrem freien Ende hin verjüngende Zunge, ausgeführt ist. Bei dieser Variante der Verankerungselemente sind diese teilweise aus der Thermoplatte ausgestanzt und ragen aus der von der Thermoplatte aufgespannten Ebene heraus, indem sie von der Thermoplatte in einem vorzugsweise spitzen Winkel abstehen. Damit erstrecken sich diese Verankerungselemente, die vorzugsweise als sich verjüngende Zungen ausgeführt sind, schräg in das Dämmmaterial des Dämmelements hinein, untergreifen dieses also, womit ausreichend mechanischer Halt für die Thermoplatte gegeben ist. Wenn zumindest einer der Längsränder der Zunge gezackt ist und/oder die Zungen anderweitig mindestens einen Widerhaken aufweist, wird die mechanische Halterung der Verankerungselemente in dem Dämmelement weiter verbessert.

Allgemein ist es ferner von Vorteil, wenn die Verankerungselemente abstehende Widerhaken aufweisen. Ein derartiger Widerhaken kann beispielsweise auch aus einer Zunge freigeschnitten sein, wobei er dann gegenläufig zum freien, sich verjüngenden Ende der Zunge verläuft (Widerhaken).

Wie oben beschrieben, können statt der einteilig mit der Thermoplatte ausgebildeten Verankerungselemente und auch zusätzlich zu diesen separat zur Thermoplatte ausgeführte Verankerungselemente eingesetzt werden, die dann zweckmäßigerweise nach Art eines Dübels mit einem Schaft und einem verbreiterten Kopfende ausgebildet sind. Auch hier können diese Verankerungselemente Widerhaken aufweisen. Bekannt sind auch Spreizdübelkonzepte, die als Verankerungselemente erfindungsgemäß bzw. gemäß einer vorteilhaften Weiterbildung der Erfindung eingesetzt werden können. Derartige mechanische Verankerungselemente sind auch als Tellerdübel bekannt. Sie verlaufen dann durch in der Thermoplatte ausgebildete Löcher, wobei die verbreiterten Köpfe von oben auf der Thermoplatte aufliegen oder sich in in der Thermoplatte ausgebildeten Sicken (nach dem Senkkopfschraubenprinzip) befinden und wobei sich die Schäfte dieser Verankerungselemente in das Dämmmaterial des Dämmelements hinein erstrecken.

Als wärme- und/oder trittschalldämmendes Material kommt insbesondere Mineralwolle bzw. -fasern, insbesondere Steinwolle bzw. -fasern, Sisal, tierische Wolle und/oder Haare, Kokos, Heu, Getreidestroh, Hanf, Holzwolle, Holzfasern oder andere alternative Dämmstoffe und/oder nachwachsende Rohstoffe und/oder einen Mischverbund oder Mehrlagenverbund der genannten Materialien in Frage. An sich kann jedes bekannte Dämmmaterial für das Dämmelement verwendet werden, wie z.B. aus Kunststoff (z.B. EPS, Schäume aus z.B. PU o.dgl.). Die Verankerungselemente erstrecken sich in das Dämmmaterial hinein. Insbesondere kommt als Dämmmaterial Fasermaterial (z.B. verfestigt, gepresst o.dgl. mechanisch bearbeitet) in Frage, wobei die Fasern parallelisiert sein können oder in anderer Art und Weise relativ zueinander verlaufen (beispielsweise Wirrfasern). Das Dämmmaterial sollte nicht brennbar bzw. nicht glimmend sein.

Die Thermoplatte besteht aus vorzugsweise metallischem Material wie beispielsweise einer Aluminiumlegierung oder aus anderen wärmeleitfähigen und vorzugsweise formbaren Materialien.

Wie bereits oben erwähnt, ist die Erfindung vorzugsweise einsetzbar bei wärme- und/oder trittschalldämmendem Fasermaterial wie beispielsweise Faservlies mit insbesondere Kunststoff- oder mineralischen Fasern.

Ein Vorteil der erfindungsgemäßen Dämmschicht besteht darin, dass die Thermoplatten und die Dämmelemente im Bedarfsfalle erst vor Ort, also bauseitig, montiert werden und damit als getrennte Komponenten angeliefert werden können. Beim Aufbau der Flächentemperiervorrichtung kann also zunächst die Dämmschicht, d.h. die Dämmelemente, verlegt werden. Auf die mit ihren Nuten fluchtend verlegten Dämmelemente werden dann die Thermoplatten "aufgesteckt", wozu die mechanischen Verankerungselemente, wie oben beschrieben, dienen. Das hat den Vorteil, dass beim Auslegen der zu temperierenden Fläche mit den Dämmelementen und beim dabei zumeist unvermeidlichen Zuschneiden der Dämmelemente nur diese zugeschnitten werden müssen, da zu dem Zeitpunkt die Thermoplatten noch nicht vorhanden sind, diese Thermoplatten dann also im Regelfall nicht zugeschnitten werden müssen. Es hat sich als zweckmäßig herausgestellt, wenn die Thermoplatten bezüglich ihrer Flächenerstreckung kleiner sind als die Oberseiten der Dämmelemente. Beispielsweise könnte man pro Dämmelement mehrere Thermoplatten vorsehen, wobei die einzelnen Thermoplatten dann auf Stoß oder mit Fuge verlegt werden. Es ist auch möglich, größerflächige Thermoplatten vorzusehen, die sich über mehrere Dämmelemente erstrecken.

Mit anderen Worten kann es also zweckmäßig sein, wenn sich die mindestens eine Thermoplatte oder die mehreren Thermoplatten, die auf der Oberseite eines Dämmelements angeordnet sind, innerhalb der vom Rand des Dämmelements begrenzten Oberseite erstreckt bzw. erstrecken. Alternativ ist es ebenfalls denkbar, dass mehrere Dämmelemente nebeneinander angeordnet sind, wobei eine Nut in der Oberseite eines Dämmelements mit einer Nut in der Oberseite eines benachbarten Dämmelements fluchtet, und dass sich eine Thermoplatte über zumindest Teilbereiche der Oberseiten zweier benachbarter Dämmelemente erstreckt.

Gleichzeitig besteht auf Wunsch aber auch die Möglichkeit, die Konfektionierung der Thermoplatte mit dem Dämmstoff werkseitig durchzuführen, um dem Verarbeiter vor Ort einen Arbeitsschritt bei der Erstellung einer Flächenheizung/Flächentemperierung zu ersparen.

Wie bereits oben erwähnt, erfolgt die Fixierung der Thermoplatten auf den Oberseiten der Dämmelemente mittels mechanischer Verankerungselemente. Hierbei kann es sich um die unterschiedlichsten Arten von Befestigungselementen handeln, wie beispielsweise Ankerstifte, Dübel, Haken, Nägel, Nadeln, Schrauben, Spreizdorne, Dorne usw. An diesen Befestigungs- bzw. Verankerungselementen sind dann zweckmäßigerweise Widerhakenkonturen vorgesehen, wie beispielsweise "gezackte" Ränder oder aufgeraute oder anderweitig mit Wider- bzw. Verankerungsstrukturen versehbare Oberflächen. Nichtsdestotrotz kann es aber auch bei derartigen mechanischen Befestigungen von Vorteil sein, wenn die mindestens eine Thermoplatte mittels eines Klebers, insbesondere eines gegenüber sowohl dem Material der Thermoplatte als auch dem Material des Dämmelements inerten Klebers, auf der Oberseite des Dämmelements fixiert ist. Hierbei kann der Kleber auf der Unterseite der Thermoplatte oder auf der Oberseite des Dämmstoffes aufgetragen sein, sofern das Thermoelement werkseitig auf dem Dämmstoff vormontiert oder eine bauseitige Montage erfolgen muss. Der Kleber kann zusätzlich zu der mechanischen Fixierung durch die Verankerungselemente oder alternativ dazu vorgesehen sein.

Die Erfindung wird nachfolgend anhand zweier Ausführungsbeispiele sowie unter Bezugnahme auf die Zeichnung näher erläutert. Im Einzelnen zeigen dabei:
- Fig. 1: perspektivisch und in Explosionsdarstellung ein erstes Ausführungsbeispiel eines Dämmelementes mit zwei Nuten in der Oberseite und zwei Thermoplatten mit jeweils einer Sicke, wobei jede Sicke einer anderen der beiden Nuten zugeordnet ist,
- Fig. 2: einen Schnitt entlang der Linie II-II der Fig. 1 im montierten Zustand von Dämmelement und Thermoplatte,
- Fig. 3: eine Unteransicht auf eine alternativ ausgestaltete Thermoplatte, und
- Fig. 4: eine Seitenansicht der Thermoplatte in Richtung des Pfeils IV der Fig. 3

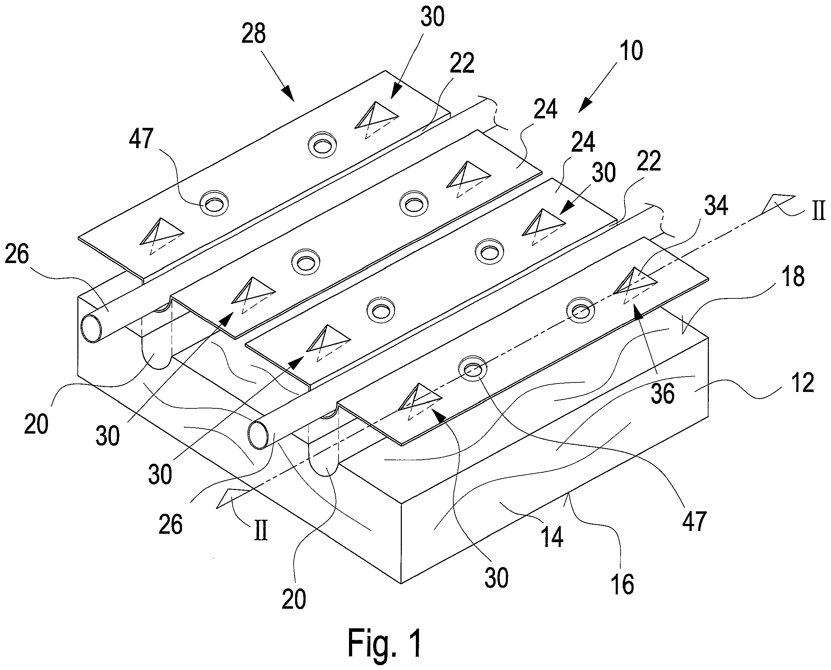

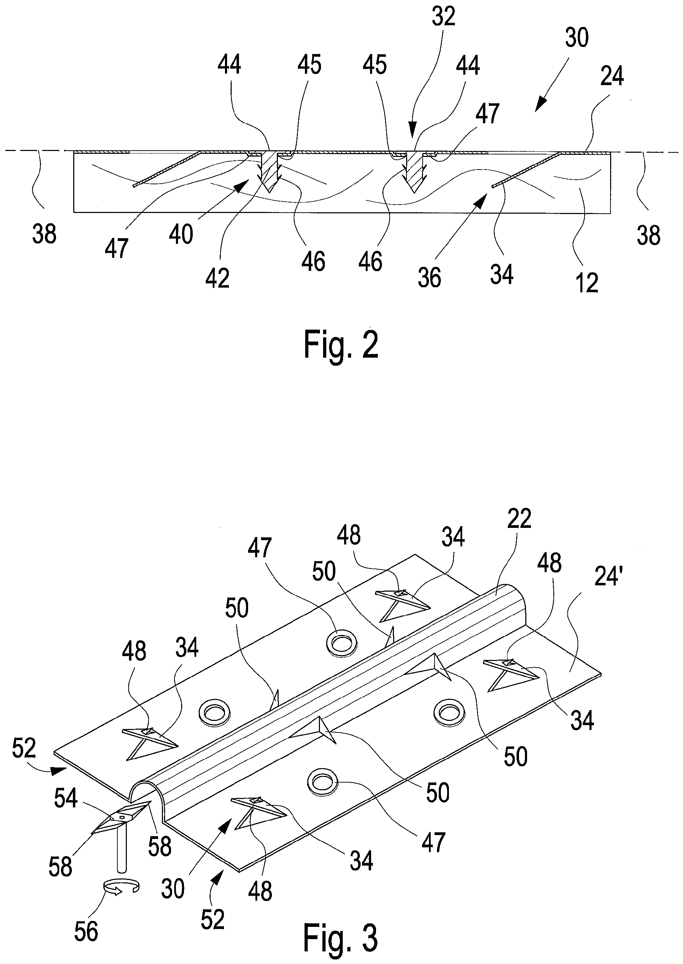

In den Fign. 1 und 2 ist ein erstes Ausführungsbeispiel einer Dämmschicht mit thermischer Kopplung zur Oberseite der Dämmschicht 10 gezeigt. Die Dämmschicht 10 weist mindestens ein Dämmelement 12 auf, das ein wärme- und/oder trittschalldämmendes Fasermaterial 14 aufweist.

Normalerweise besteht die Dämmschicht aus mehreren nebeneinanderliegenden Dämmelementen 12, was in Fig. 1 aber nicht dargestellt ist.

Jedes Dämmelement 12 weist eine Unterseite 16 zur Auflage auf einem Untergrund und eine Oberseite 18 auf. In der Oberseite 18 sind in diesem Ausführungsbeispiel zwei Nuten 20 ausgebildet. In diese Nuten 20 sind Sicken 22 von Thermoplatten 24 aus thermisch leitendem Metall eingesetzt. Die Sicken können wahlweise mit einer oder ohne eine Omega-Führung zum besseren Halt und zur besseren thermischen Kopplung der Rohre an der Thermoplatte 24 ausgeführt sein. In den Sicken 22 der Thermoplatten 24 sind Rohre 26 verlegt. Dadurch wird die thermische Kopplung der Rohre 26 mit der Oberseite 28 der Dämmschicht 10 gewährleistet. Dieser Ansatz ist insbesondere für die Renovation und den Trockenbau von Vorteil. Durch das "Einbringen" der Rohre 26 in die Dämmelemente 12 wird eine reduzierte Aufbauhöhe der Flächenheizung realisiert. Zudem können mehrere Thermoplatten 24 (was in den Figuren nicht dargestellt ist) durch sogenannten Sollbruchstellen miteinander verbunden sein, so dass sich daraus unterschiedlich lange Thermoelemente aus mehreren Thermoplatten ergeben. Die Länge der einzelnen Thermoplatten und/oder die Länge der durch die Sollbruchstellen verbundenen Thermoplatten ist dabei variabel und nicht explizit festgelegt.

Wie anhand der Fign. 1 und 2 zu erkennen ist, weist jede Thermoplatte 24 zwei verschiedene Typen von mechanischen Verankerungselementen 30, 32 auf. Es sei an dieser Stelle aber hervorgehoben, dass die Erfindung nicht darauf beschränkt ist, dass auch beide Typen von Verankerungselementen 30, 32 notwendigerweise vorzusehen sind. Jeweils einer dieser Verankerungselementtypen ist ausreichend, um erfindungsgemäß eine Thermoplatte 24 an einem Dämmelement 12 zu halten.

Der erste Typ von Verankerungselementen 30 ist durch einen Teilfreischnitt von Material der Thermoplatte 24 gebildet. Hierdurch entsteht eine Zunge 34, die vorzugsweise zu ihrem freien Ende 36 hin verjüngend zuläuft. Die Zunge 34 wird aus der von der Thermoplatte 24 aufgespannten Ebene 38 heraus nach unten gebogen, so dass die Zungen 34 in das Material des Dämmelementes 12 eingetrieben werden, wenn die Thermoplatte 24 von oben auf das Dämmelement 12 aufgesetzt wird. Die Ränder der Zungen 34 können dabei gezackt oder auf andere Art und Weise strukturiert sein, um den Verhakungs- und Verankerungseffekt der Zungen 34 im Fasermaterial 14 des Dämmelements 12 zu verbessern.

Der zweite Typ von Verankerungselement 32 ist in diesem Ausführungsbeispiel als Dübel 40 ausgebildet, der einem Schaft 42 und ein verbreitertes Kopfende 44 aufweist. Am Schaft 42 können Verhakungsvorsprünge 46 vorgesehen sein (sogenannte Tannenbaumstruktur). Die Verankerungselemente werden durch Löcher 45 in den Thermoplatten 24 hindurch in das Fasermaterial 14 der Dämmelemente 12 getrieben. Im Bereich der Löcher 45 können die Thermoplatten 24 sickenartige Vertiefungen 47 aufweisen, deren Tiefe im Wesentlichen gleich der Dicke der Kopfenden 44 der Dübel 40 sind, so dass die Kopfenden 44 "versenkt" sind, wie in Fig. 2 gezeigt.

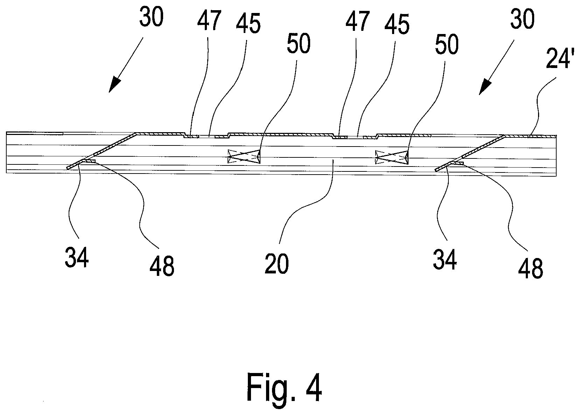

In den Fign. 3 und 4 ist ein zweites Ausführungsbeispiel einer Thermoplatte gezeigt. Soweit die dort gezeigten Einzelheiten konstruktiv oder funktional denen der Fign. 1 und 2 gleichen bzw. identisch zu diesem sind, sind sie in den Fign. 3 und 4 mit den gleichen Bezugszeichen wie in den Fign. 1 und 2 bezeichnet.

Der Unterschied der Thermoplatte 24' der Fign. 3 und 4 gegenüber einer Thermoplatte 24 gemäß den Fig. 1 und 2 ist darin zu sehen, dass die Zungen 34 der Verankerungselemente 30 noch zusätzlich mit Widerhaken 48 beliebiger Form versehen sind, die wie die Zungen 34 bezüglich der Thermoplatte 24' aus dem Material der Zungen 34 teilweise freigeschnitten und herausgebogen sind.

Anhand von Fig. 3 soll noch kurz auf weitere Varianten der Erfindung eingegangen werden. So zeigt Fig. 3, dass aus den Seitenflanken der rinnenförmigen Sicke 22 mehrere Verankerungselemente 50 abstehen. Diese befinden sich dann unterhalb (bzw. bezogen auf die Darstellung gemäß Fig. 3 oberhalb) von Plattenbereichen 52 des Thermoelements 24 bzw. 24'. Die Verankerungselemente 50 werden beispielsweise mittels eines Schneidwerkzeugs 54 gebildet, das ähnlich einer Klinge mit zwei parallelen Schneidkanten bzw. ähnlich einem Schneidmesser beispielsweise eines Rasenmähers ausgebildet ist und von oben in die Sicke 22 eingebracht wird. Durch Verdrehen (siehe die Pfeile 56) des Schneidwerkzeugs 54 arbeiten sich deren Schneidenden bzw. Schneidkanten 58 in das Material der Thermoplatte 24 bzw. 24' ein und drücken dabei die Verankerungselemente 50 nach außen. Dieser Vorgang erfolgt, wenn die Thermoplatte 24 bzw. 24' auf dem Dämmelement 12 aufliegt. Auch die Ausformung der anderen zuvor beschriebenen Typen von Verankerungselementen kann (muss aber nicht zwingend) erfolgen, wenn die Thermoplatte 24, 24' auf dem Dämmelement 12 aufliegt.

Die Erfindung ist darin zusehen, dass die Thermoplatte zumindest ein Verankerungselement von einem der drei zuvor beschriebenen Typen von Verankerungselementen, die aus der Thermoplatte ausgeformt werden, aufweist. Vorzugsweise ist die Thermoplatte mit mehreren Verankerungselementen eines oder mehrerer der drei zuvor beschriebenen Typen versehen. Insbesondere ist es von Vorteil, wenn sämtliche drei Typen von Verankerungselementen vorhanden sind.

Zur Ausbildung der abstehenden Widerhaken 48 der Verankerungselemente 30 sei gesagt, dass diese abstehenden Widerhaken 48 auch durch Einschneiden eines Randes der freigeschnittenen Zunge 34 und gegensinniges Verbiegen beidseitig des Einschnittes erfolgen kann, wie in Fig. 3 bei der äußerst rechts gezeigten Zunge 34 angedeutet.

### BEZUGSZEICHENLISTE

- 10: Dämmschicht
- 12: Dämmelement
- 14: wärme- und/oder trittschalldämmendes Fasermaterial
- 16: Unterseite eines Dämmungselementes
- 18: Oberseite eines Dämmungselementes
- 20: Nuten
- 22: Sicken
- 24: Thermoplatte
- 24': Thermoplatte
- 26: Rohre
- 28: Oberseite der Dämmschicht
- 30: Verankerungselemente
- 32: Verankerungselemente
- 34: freigeschnittene Zunge
- 36: freies Ende einer Zunge
- 38: Ebene einer Thermoplatte
- 40: Dübel
- 42: Schaft
- 44: verbreitertes Kopfende
- 45: Löcher
- 46: Verhakungsvorsprünge
- 47: Vertiefung
- 48: abstehende Widerhaken
- 50: Verankerungselement abstehend von der Sicke
- 52: Plattenbereich der Thermoplatte
- 54: Schneidwerkzeug
- 56: Drehrichtung des Schneidwerkzeugs
- 58: Schneidkanten des Schneidwerkzeugs

## Patentansprüche

1. Dämmschicht (10) mit thermisch leitender Oberseite für eine Flächentemperiervorrichtung, insbesondere Flächenheizung und vorzugsweise Fußbodenheizung, mit
- mindestens einem plattenartigen Dämmelement (12) aus wärme- und/oder trittschalldämmendem Material, das eine Unterseite (16) zur Auflage auf einem Untergrund und eine der Unterseite (16) abgewandte Oberseite (18) aufweist,
- wobei die Oberseite (18) des Dämmelements (12) mindestens eine Nut (20) aufweist, und
- mindestens einer thermisch leitenden Thermoplatte (24), die mindestens eine Sicke (22) zur Aufnahme einer temperierbaren Leitung wie z.B. eines Rohres (26) für den Transport eines Temperierfluids und mindestens einen neben der Sicke (22) angeordneten Plattenbereich (52) aufweist,
- wobei die Thermoplatte (24) zur Anordnung auf der Oberseite (18) des Dämmelements (12) und die mindestens eine Sicke (22) der Thermoplatte (24) zur Aufnahme durch der mindestens eine Nut (20) der Oberseite (18) des Dämmelements (12) vorgesehen ist,
- wobei die Thermoplatte (24) mittels mindestens eines einteilig mit der Thermoplatte (24) ausgebildeten Verankerungselements (30, 50) mechanisch an dem Dämmelement (12) fixierbar ist und
- wobei das mindestens eine Verankerungselement (30, 50) von dem oder einem Plattenbereich (52) der Thermoplatte (24) zum Dämmelement (12) hin oder von der oder einer Sicke (22) nach unten oder seitlich zum Dämmelement (12) hin gerichtet ist und in dessen wärme- und/oder trittschalldämmende Material des Dämmelements (12) hineinragt.

2. Dämmschicht (10) nach Anspruch 1, **dadurch gekennzeichnet, dass** das mindestens eine Verankerungselement (30, 50) unter einem insbesondere spitzen Winkel von einem Plattenbereich (52) der Thermoplatte (24) oder unter einem insbesondere rechten Winkel von einer Seitenflanke einer Sicke (22) abstehen.

3. Dämmschicht (10) nach Anspruch 2, **dadurch gekennzeichnet, dass** ein einteilig mit der Thermoplatte (24) ausgebildetes Verankerungselement (30) als aus dem Material der Thermoplatte (24) freigeschnittene Zunge (34), insbesondere als sich zu ihrem freien Ende hin verjüngende Zunge (34), ausgeführt ist.

4. Dämmschicht (10) nach Anspruch 3, **dadurch gekennzeichnet, dass** zumindest einer der Längsränder der Zunge (34) gezackt ist oder mindestens einen Widerhaken (46) aufweist.

5. Dämmschicht (10) nach einem der Ansprüche 1 bis 4, **dadurch gekennzeichnet, dass** die Verankerungselemente (30, 32) Widerhaken (46) aufweisen.

6. Dämmschicht (10) nach Anspruch 5 und einem der Ansprüche 3 und 4, **dadurch gekennzeichnet, dass** von der Zunge (34) mindestens ein Widerhaken (46) absteht, der aus dem Material der Zunge (34) freigeschnitten ist.

7. Dämmschicht (10) nach einem der Ansprüche 2 bis 6, ferner **gekennzeichnet durch** ein weiteres gegenüber der Thermoplatten (24) separates Verankerungselement (30), das nach Art eines Dübels (40) mit einem Schaft (42) und einem verbreiterten Kopfende (44) ausgebildet ist und sich durch ein in der Thermoplatte (24) ausgebildetes Loch (45) erstreckt.

8. Dämmschicht (10) nach einem der Ansprüche 1 bis 7, **dadurch gekennzeichnet, dass** das wärme- und/oder trittschalldämmende Material des Dämmelementes (12) Mineralwolle oder -fasern, insbesondere Steinwolle, Sisal, tierische Wolle und/oder Haare, Kokos, Heu, Getreidestroh, Hanf, Holzwolle oder -fasern, oder andere alternative Dämmstoffe und/oder nachwachsende Rohstoffe und/oder einen Mischverbund oder Mehrlagenverbund der genannten Materialien aufweist und/oder dass die Thermoplatte Metall aufweist und/oder dass das wärme- und/oder trittschalldämmende Material ein Faservlies mit insbesondere Kunststoff- oder mineralischen Fasern aufweist.

9. Dämmschicht (10) nach einem der Ansprüche 1 bis 8, **dadurch gekennzeichnet, dass** sich die mindestens eine Thermoplatte (24) oder die mehreren Thermoplatte (24), die auf der Oberseite (18) eines Dämmelements (12) angeordnet sind, innerhalb der vom Rand des Dämmelements (12) begrenzten Oberseite (18) erstreckt bzw. erstrecken, oder dass mehrere Dämmelemente (12) nebeneinander angeordnet sind, wobei eine Nut (20) in der Oberseite (18) eines Dämmelements (12) mit einer Nut (20) in der Oberseite (18) eines benachbarten Dämmelements (12) fluchtet, und dass sich eine Thermoplatte (24) über zumindest Teilbereiche der Oberseiten (18) zweier benachbarter Dämmelemente (12) erstreckt.

10. Dämmschicht (10) nach einem der Ansprüche 1 bis9, **dadurch gekennzeichnet, dass** die mindestens eine Thermoplatte (24) mittels eines Klebers, insbesondere eines gegenüber sowohl dem Material der Thermoplatte als auch dem Material des Dämmelements (12) inerten Klebers, auf der Oberseite (18) des Dämmelements (12) fixiert ist, und zwar zusätzlich zu der mechanischen Fixierung durch die Verankerungselemente (30, 32).

11. Dämmschicht (10) nach einem der Ansprüche 1 bis 10, **dadurch gekennzeichnet, dass** ein oder mehrere Verankerungselemente (30) in einem Plattenbereich (52) der Thermoplatte (24) außerhalb von deren Sicke (22) ausgebildet sind.

12. Dämmschicht (10) nach einem der Ansprüche 1 bis 11, **dadurch gekennzeichnet, dass** ein oder mehrere Verankerungselemente (50) in einer Seitenflanke der Sicke (22) der Thermoplatte (24) angeordnet ist und damit seitlich von der Sicke (22) in einem Winkel, insbesondere einem spitzen und vorzugsweise einem Winkel von im Wesentlichen 90°, zum Verlauf der Sicke (22) von dieser absteht.

13. Thermisch leitende Lage für eine Dämmschicht für eine Flächentemperiervorrichtung, insbesondere Flächenheizung und vorzugsweise Fußbodenheizung, wobei die Dämmschicht mindestens ein Dämmelement (12) aus wärme- und/oder trittschalldämmendem Material, das eine Unterseite (16) zur Auflage auf einem Untergrund und eine der Unterseite (16) abgewandte Oberseite (18) aufweist, wobei die Oberseite (18) des Dämmelements (12) mindestens eine Nut (20) aufweist, mit
- mindestens einer thermisch leitenden Thermoplatte (24), die mindestens eine Sicke (22) zur Aufnahme einer temperierbaren Leitung wie z.B. eines Rohres (26) für den Transport eines Temperierfluids und mindestens einen neben der Sicke (22) angeordneten Plattenbereich (52) aufweist,
- wobei die Thermoplatte (24) zur Anordnung auf der Oberseite (18) des Dämmelements (12) und die mindestens eine Sicke (22) der Thermoplatte (24) zur Aufnahme durch der mindestens eine Nut (20) der Oberseite (18) des Dämmelements (12) vorgesehen ist,
- wobei die Thermoplatte (24) mittels mindestens eines einteilig mit der Thermoplatte (24) ausgebildeten Verankerungselements (30, 50) mechanisch an dem Dämmelement (12) fixierbar ist und
- wobei das mindestens eine Verankerungselement (30, 50) von dem oder einen Plattenbereich (52) der Thermoplatte (24) zum Dämmelement (12) hin oder von der oder einer Sicke (22) nach unten oder seitlich zum Dämmelement (12) hin gerichtet ist und in dessen wärme- und/oder trittschalldämmende Material des Dämmelements (12) hineinragt.

14. Thermisch leitende Lage nach Anspruch 13, **dadurch gekennzeichnet, dass** das oder die Verankerungselemente (30, 32, 50) im an dem Dämmelement (12) anliegenden Zustand der Thermoplatte (24) in dieser unter Einbringen in das Dämmelement (12) formbar sind.

15. Thermisch leitende Lage nach Anspruch 14, **dadurch gekennzeichnet, dass** die mindestens eine Thermoplatte (24) das oder die in einem der Ansprüche 2 bis 13 genannten Merkmale aufweist.
